# EUROPEAN PATENT APPLICATION

(11) **EP 1 202 507 A1**
(43) Date of publication of application: **02.05.2002**
(21) Application number: 00309597.3
(22) Date of filing: 31.10.2000
(51) Int. Cl.: H04L 12/64

(54) **Telecommunications systems**

(71) Applicant: BRITISH TELECOMMUNICATIONS public limited company, London EC1A 7AJ (GB)
(72) Inventor: The designation of the inventor has not yet been filed
(74) Representative: Lloyd, Barry George William

(57) **Abstract**

An interface (1) to a network such as the internet is connected via an access network 4 to user terminal 7. Interposed in this path is a branch point (3) which divert some (though not all) of the data traffic from the interface (1) to the terminal (7) via an alternative path such as a satellite link (12, 13, 14, 15). Its decision as to which path to follow is made by examining the contents of that item.

## Description

This invention relates to telecommunications networks, and more particularly to the provision of broadband telecommunications services, such as might be used for internet and similar services.

Today, there is an increasing demand for broadband services to support a wide range of information services to end users, including for example email, internet and intranet access, file transfer and audio and video programme distribution. One solution to this has been the development of asymmetrical digital subscriber line (ADSL) services by which relatively high bit rates can be provided in the downstream direction (e.g. from an information provider such as an internet service provider (ISP) or corporate host, to their end users) over copper pair telephone lines. (ADSL and variants of it such as VDSL (Very high speed ADSL) are commonly referred to as "xDSL"). However, these suffer several disadvantages. In particular, the use of copper pair lines has limited distance reach, and the costs associated with the trunk and access distribution networks can cause them to be uneconomic for coverage of some parts of a desired service area.

As illustrated (see M. Fitch and A. Fidler, "An overview of satellite access networks", *BT Technology* Journal, Vol. 18, No. 3 (July 2000), pp. 94 - 101) satellite radio links can be used in an arrangement where signals from an ISP are transmitted in digital video broadcast (DVB) format via a satellite link to a user's terminal, whilst traffic in the opposite direction is sent via the public switched telephone network.

According to the present invention there is provided a telecommunications system as set out in the claims.

Some embodiments of the invention will now be described, by way of example, with reference to the accompanying drawings.

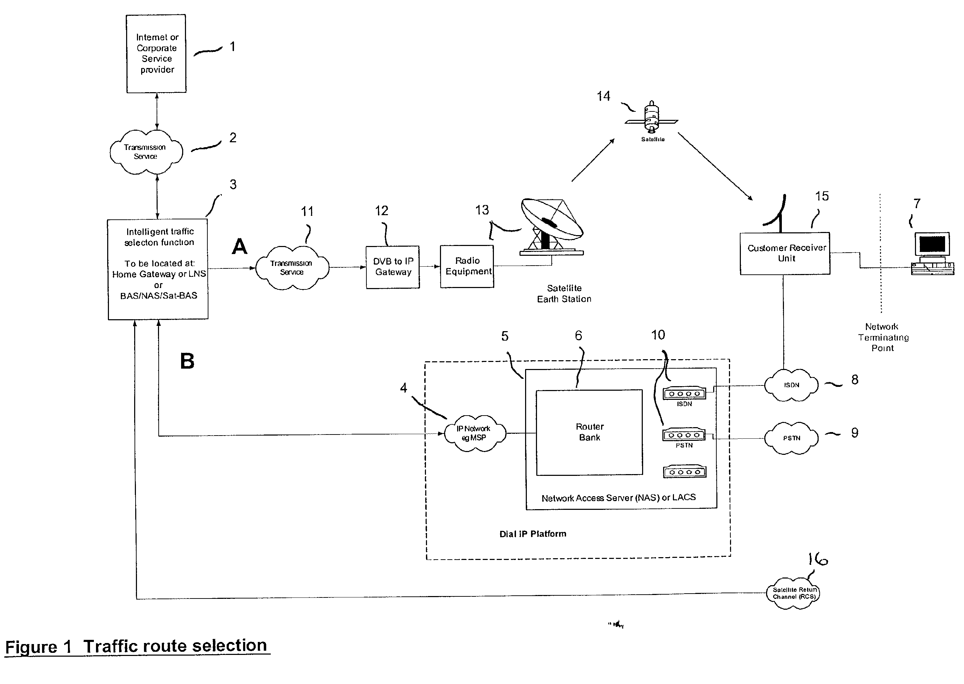

Figure 1 shows a first version of the invention where a network server 1, forming an interface to the internet (not shown), operated for example by an internet service provider or corporate intranet service is connected by a transmission link 2 of any suitable type to a router 3 (also known as a home gateway or L2TP server). This is connected in turn via an internet protocol (IP) network 4 (such as a multi-service platform) to a network access server or local access concentrator (LAC) 5. User terminals 7 are connected to this, via dial-up connections through the ISDN 8, or PSTN 9 and modems 10, connected to the LAC 5.
It should be understood that each server computer 1 has its own home gateway 3, though there may, and in practice generally would, be a number of servers and gateways connected to the network 4.

As described so far, this arrangement is, of course, conventional. However the gateway 3 is also connected via a transmission link 11 to a IP-to-DVB gateway 12 and thence to a satellite ground station transmitter 13. Signals from the transmitter are relayed by a transponder in a satellite 14 to receiver units 15 which form part of the user terminals 7. However, other types of radio link may also be used for this purpose.

An important feature of the arrangement shown in Figure 1 is that it uses, for conveying traffic from the ISP's server 1 to the user terminal 7, *both* a broadband path *A* via the satellite link *and* a narrowband path *B* via the PSTN. The upstream connection in the opposite direction is via the PSTN path *B* only. Consequently, additional functionality is required of the device 3, in that it has to examine the downstream traffic in order to decide whether it is to be sent via the satellite link (A) or via the terrestrial return channel (B).

At this point it should be appreciated (as will be discussed in more detail later) that although the actual data that is exchanged between the server 1 and the user terminal 7 consists (aside from set-up signalling) of IP packets, the actual transmission path between the server and terminal is simply a transparent connection, using a tunnelling protocol for conveying the data.

Therefore the router 3 of Figure 1 contains also arrangements for recognising patterns in the packets that are passing through it, to the extent necessary for this function.

The actual decision as to which data are to be sent over which path is made on the basis of prevailing network conditions and/or, information inserted into the data by the server 1 prescribing which path should be followed. Thus, selection criteria may include
- capacity available in the respective downstream and return links;
- UDP port numbers identified in the packet header;
- multicast/unicast identifiers in the IP header; and
- information contained in higher level protocol structures to indicate specific QoS, or application-related parameters.

This functionality may be based on the application of standard or proprietary routing protocols, e.g. MPLS, DiffServ, IntServ, RSVP, Layer 4 switching, policy based routing, conditional access routing, QOS/bandwidth management features etc.

Of course, this process requires that the relevant port numbers, identifiers or the like have been inserted into the data already. Normally this function would be performed by the server 1, depending on the type of data. For example, data forming part of the transmission of a large file would be a clear candidate to be marked to travel via satellite, whereas one would prefer time-critical data for which the quarter-second or so delay inherent in links via geostationary satellites would be significant, to travel via the terrestrial path. Some types of computer games, for example, fall into this category. Another possibility is to send an initial portion of a file or document on link *B* and the remainder on link *A.*

Thus it will be seen that one is selecting, at a suitable point in the network between the information providers network server and the local access concentrator, traffic to be forwarded to the end user via the high-speed, broadcast-capable satellite link, and traffic to be forwarded to the end user via the low-delay terrestrial link. Figure 1 shows one possible point in an example network where this decision process could take place.

Figure 1 also shows at 16 the possibility of the use of a satellite return channel, to illustrate the possibility that the upstream link may also make use of satellite transmission, and indeed that further users may use satellite links exclusively, coexisting on the same system as users using the mixed satellite/terrestrial service just described.

It will be understood that the transponder 14 will in practice carry traffic for more than one user terminal 7. Thus, the gateway 12 will include in the DVB frame structure identifies indicating which user the data is intended for, and the receiver 15 will examine the received frames so as to extract those which are addressed to the particular user 7.

With a view to achieving the seamless connection of the satellite downstream and upstream access network to a small number of nodes in the terrestrial broadband network, in order to make common use of the broadband infrastructure, for example the core network, the connection to information providers, proxy servers, cache farms and the service surround, a modified version will now be described , using a dedicated Satellite Broadband Access Server (BAS) in an example network.

In Figure 1 the intelligent routing process has been identified as function of a network server or router located at a point in the network which connects the information provider with the distribution network. It may take several forms (both hardware and software) depending on network topology, and for example may (as in Figure 1) be a Home Gateway associated with a particular information provider, a L2TP (or equivalent protocol) Network Server, a Broadband Access Server supporting access to the entire network or a hybrid combination of these options.

Although the system of Figure 1 is highly satisfactory, it does not necessarily make the best use of available network resources.

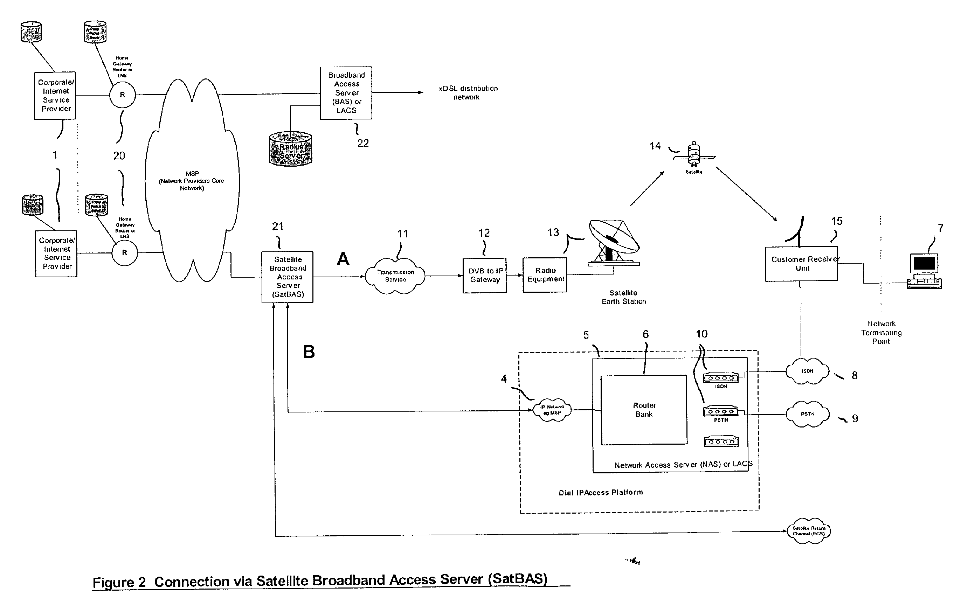

Thus, Figure 2 shows the second embodiment of the invention, using a small number of local access servers or concentrators to seamlessly connect the satellite distribution network to the core broadband infrastructure. This may take several forms (both hardware and software) depending on network topology, and for example may be a modified local access concentrator (LAC), broadband access server (BAS), L2TP network server (home gateway), standard router or a hybrid a combination of this list.

More specifically, Figure 2 again has the servers 1, the same terrestrial path *B* with access network components 4 to 6 and 8 to 10, the path *A* with components 11 to 15, and the user terminals 7. Again, each server has a router 20 analogous to the router 3 of Figure 1 except that these routers are conventional as they are no longer the point at which the satellite link "breaks in" to the terrestrial path. Rather, the routers 20 are connected via a broadband telecommunications network to a satellite broadband access server 21, which is connected to the two paths *A, B* and routes traffic over one or the other in the manner described earlier. A broadband access server 22, delivering service via an ADSL (or more generally, xDSL) distribution network is also shown, to illustrate the fact that this arrangement offers the flexibility of mixing different modes of delivery, so that one can extend economic coverage for a broadband service to the whole of a desired market area by using, for some parts of the coverage area, wholly terrestrial links, and for others terrestrial transmission for the upstream traffic from end users, and a combination of terrestrial and satellite transmission for the downstream traffic to end users. In conventional systems, Broadband Access Servers (BAS) and Network Access Servers (NAS) handle the connection between the distribution network and core network in the terrestrial ADSL and Dial IP access scenarios respectively. Their main functionality is to tunnel the end-users signalling and data traffic (e.g. point-to-point protocol (PPP) session) across the network operators core network to the appropriate layer 2 tunnelling protocol (L2TP) network server (LNS) or home gateway (HG) (the generic term "Home Gateway" refers both to a stand-alone home gateway router and home gateway farms with multiple gateways) associated with the information provider. In both these scenarios an end to end bi-directional tunnel is created between the end users equipment and the LNS or HG.

In the system of Figure 2 we need to break out this tunnel at an appropriate point in the network between the LNS/HG and the LAC and redirect the downstream traffic through the satellite distribution path. It is proposed that this functionality will be achieved in modified Satellite Broadband Access Server (SatBAS) that will seamlessly sit between the Dial IP LAC/NAS and the LNS/HG associated with the information provider. It is proposed that the downstream satellite traffic will be seamlessly broken out of the standard bidirectional tunnel by the manipulation of proprietary and standard tunnelling protocols (L2TP, L2F), point to point protocols (PPPoA, PPP, PPTP, ATMP) and additional IP/UDP routing protocols as required. It is envisaged that these designated Satellite Broadband Access Servers (SatBAS) will be generally collocated with their respective IP/DVB Gateway and satellite uplink stations.

A modification (which can be applied to the system of Figure 1, or to that of Figure 2) now to be described concerns the allocation of transmission resource in the hub stations 13 and satellites 14, and receiver functionality in the customer premise satellite receiver 15, to enable a wide range of services to be carried simultaneously while making most efficient use of transmission resource. It involves the use of separate satellite transponders for distinct types of traffic, for example broadcast streaming such as TV and radio channels; broadcast files such as software packages, data packages or video programmes; and interactive traffic such as internet browsing, remote access, and game-playing. Figure 3 illustrates the corresponding allocation of transponder capacity and customer premise receiver functionality.

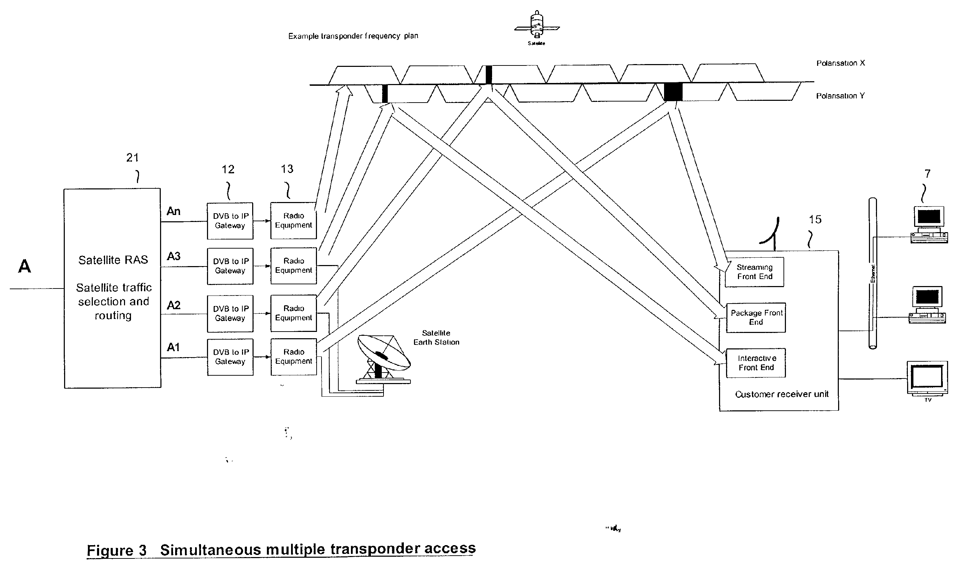

Here, the idea is that, in a given geostationary orbit location, separate transponders are allocated to traffic with particular characteristics. The objective is to require the minimum degree of repetition or duplication of traffic carried in the satellite, by providing sufficient individual receiver modules in the user terminal 7 to allow several distinct services to run concurrently. For example, provision of two receiver modules allows reception of a broadcast stream from one transponder while simultaneously using interactive individual browsing via another transponder. A third module will also allow, for example, regular web page caching or video programme download to occur to a given schedule without affecting the other applications. Additional modules can be provided for additional simultaneous services. Thus, Figure 3 shows the duplication of units 12, 13 and 15 for each distinct path A1, A2, etc. The actual allocation of the data among the alternative paths A1, A2, ..., B can be performed by the router 3 or server 21 in the same manner as described above for selection between the two paths *A* and *B.*

It should furthermore be noted that the arrangements shown in Figure 3 could, if desired, be used in a satellite-only system, without the dual satellite/terrestrial service discussed earlier. In this case, Figure 3 would be combined with Figure 1 (or 2), with upstream communication via the satellite and with the path B (that is to say, items 4, 5, 6, 8, 9, 10) omitted.

It will be seen that the systems described alleviate some of the limitations which can render conventional systems uneconomic for the mass markets, for example their inability to carry individual and broadcast traffic to a user simultaneously, and the diverse means of connecting the information providers network server to the distribution network.

## Claims

1. A telecommunications access system comprising:
an interface to a telecommunications network;
a branch device;
first transmission means for conveying data in both directions between the interface and the branch device;
second transmission means for conveying data in both directions between the branch device and a user terminal; and
third transmission means for conveying data from the branch device to the user terminal;
wherein the branch device is arranged in operation to examine items of data received from the interface and, selectively in dependence on information contained in an item of data, to route it via the second or via the third transmission means.

2. A transmission system according to claim 1 or 2 in which the second and third transmission means have different characteristics.

3. A transmission system according to claim 1 or 2 in which the second and third transmission means deliver the data separately to the premises at which the user terminal is located.

4. A telecommunications access system according to claim 1, 2 or 3 in which the second transmission means is a terrestrial telecommunications link.

5. A telecommunications access system according to claim 1, 2 or 3 in which the second transmission means is a terrestrial telecommunications network including cables.

6. A telecommunications access system according to any on of the preceding claims in which the third transmission means has a higher capacity than the second transmission means.

7. A telecommunications access system according to any one of the preceding claims, in which the third transmission means includes a radio transmitter and radio receiver.

8. A telecommunications access system according to claim 7, in which the third transmission means is a satellite link

9. A telecommunications access system according to any one of the preceding claims, including a plurality of third transmission means, in which the branch device is operable selectively, in dependence on information contained in an item of data, to route it via the second or via a selected one of the third transmission means.

10. A telecommunications access system according to any one of the preceding claims, in which the interface is operable to insert, into items of data, information indicating which of the routes represented by the first and second transmission means the respective item is to be routed over.

11. A telecommunications access system according to claim 10, in which the inserted information indicates the second or third route in dependence on whether the item of data forms part of, respectively, a relatively small, or relatively large, body of data which is to be transmitted.

12. A telecommunications access system according to any one of the preceding claims, in which the network to which the interface is connected is a packet network, and said items of data are packets.

13. A transmission system according to claim 12 in which the first and second transmission means form a point-to-point link, and the branch device is arranged in operation to examine packets received from the interface only for the purpose of determining whether the packet is to be routed via the second transmission means or the third transmission means.

14. A telecommunications access system according to any one of the preceding claims, in which the branch device is arranged to monitor the capacity of the second and/or third transmission means and its routing decision depends also on that capacity.

15. A telecommunications access system according to any one of the preceding claims, in which the branch device is connected to a plurality of said interfaces, which interface to the network.

16. A telecommunications access system according to any one of claims 1 to 14, in which the first transmission means is a telecommunications network connecting the branch device to a plurality of said interfaces.

17. A telecommunications access system according to claim 16, in which the first transmission means is also connected to fourth transmission means for conveying data to and from further user terminals, without branching.

18. A telecommunications access system comprising:
an interface to a telecommunications network;
a branch device;
a plurality of transmission means operable concurrently to convey data from
the branch device to the user terminal;
wherein the branch device is arranged in operation to examine items of data received from the interface and, selectively in dependence on information contained in an item of data, to route it via a corresponding one of the transmission means.
